(19) Europäisches Patentamt
European Patent Office
Office européen des brevets

(11) **EP 2 582 986 B1**

(12) **FASCICULE DE BREVET EUROPEEN**

(45) Date de publication et mention de la délivrance du brevet:
**13.07.2016 Bulletin 2016/28**

(21) Numéro de dépôt: **11737988.3**

(22) Date de dépôt: **17.06.2011**

(51) Int Cl.:
*F04D 29/54* (2006.01)   *F01D 5/14* (2006.01)
*F01D 9/04* (2006.01)   *F02C 7/20* (2006.01)
*F04D 29/66* (2006.01)

(86) Numéro de dépôt international:
**PCT/FR2011/051400**

(87) Numéro de publication internationale:
**WO 2011/157971 (22.12.2011 Gazette 2011/51)**

(54) **COUPLAGE AÉRODYNAMIQUE ENTRE DEUX RANGÉES ANNULAIRES D'AUBES FIXES DANS UNE TURBOMACHINE**

AERODYNAMISCHE KOPPLUNG ZWISCHEN ZWEI RINGFÖRMIGEN REIHEN STATIONÄRER SCHAUFELN IN EINEM TURBINENMOTOR

AERODYNAMIC COUPLING BETWEEN TWO ANNULAR ROWS OF STATIONARY VANES IN A TURBINE ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.06.2010 FR 1054875**

(43) Date de publication de la demande:
**24.04.2013 Bulletin 2013/17**

(73) Titulaire: **Snecma**
**75015 Paris (FR)**

(72) Inventeurs:
• **DOMERCQ, Olivier, Stéphane**
  **F-77550 Moissy Cramayel Cedex (FR)**
• **PERROT, Vincent, Paul, Gabriel**
  **F-77550 Moissy Cramayel Cedex (FR)**
• **REISS, Hanna**
  **F-77550 Moissy Cramayel Cedex (FR)**
• **RIOS, Jean-François**
  **F-77550 Moissy Cramayel Cedex (FR)**

(74) Mandataire: **Ramey, Daniel et al**
**Ernest Gutmann - Yves Plasseraud S.A.S.**
**3, rue Auber**
**75009 Paris (FR)**

(56) Documents cités:
**EP-A1- 1 077 310**   **DE-A1- 19 525 699**
**FR-A- 982 027**   **GB-A- 2 405 184**
**US-A- 2 798 661**

**Description**

La présente invention concerne une turbomachine, telle qu'un turboréacteur ou un turbopropulseur d'avion, comprenant au moins deux rangées annulaires successives d'aubes fixes, formées par exemple par les aubes d'un étage redresseur agencé en sortie d'un étage de compression et par une rangée annulaire de bras de carter disposée en aval du redresseur.

Dans une turbomachine, le redresseur agencé en sortie d'un compresseur comprend une rangée annulaire d'aubes fixes qui sont dans la technique actuelle régulièrement réparties autour de l'axe longitudinal de la turbomachine.

Une rangée annulaire de bras de carter est disposée en aval du redresseur, les bras de carter s'étendant dans la veine d'écoulement des gaz du compresseur et assurant la transmission d'efforts entre des carters interne et externe auxquels ils sont reliés.

Dans la technique actuelle, les positions angulaires des bras de carter par rapport aux aubes du redresseur ne sont pas optimisées. Les sillages formés au niveau des bords de fuite des aubes du redresseur interagissent avec les bras de carter et génèrent des pertes de charge importantes, diminuant les performances de la turbomachine. Par ailleurs, des phénomènes de pompage initié au niveau du redresseur peuvent être constatés.

Pour améliorer les performances d'une turbomachine, il est connu de réaliser un couplage aérodynamique entre deux éléments de stator ou de rotor. La demande EP-A1-2071127 de la demanderesse décrit un procédé de conception d'une turbine multi-étages de turbomachine permettant de réaliser un couplage aérodynamique sur l'ensemble des aubages de rotor ou de stator de la turbine. Le document FR 982 027 A décrit une turbomachine illustrative du préambule de la revendication 1.

L'invention a pour but d'améliorer les performances d'une turbomachine du type précité en réalisant un couplage aérodynamique entre les aubes fixes du redresseur et les bras de carter situés en aval ou, de façon plus générale, entre deux rangées annulaires successives d'aubes fixes de la turbomachine.

Elle propose à cet effet une turbomachine, comportant au moins une première et une seconde rangées annulaires successives d'aubes fixes, telles par exemple qu'une rangée annulaire d'aubes fixes d'un étage redresseur et une rangée annulaire de bras de carter disposée en aval du redresseur, chaque aube de la seconde rangée s'étendant dans un plan radial passant entre les bords de fuite de deux aubes consécutives de la première rangée, caractérisée en ce que le pas (ou première distance angulaire) entre ces deux aubes de la première rangée qui se trouve de chaque côté du plan radial passant par une aube de la seconde rangée est supérieur au pas (ou seconde distance angulaire) entre deux aubes successives parmi les autres aubes de la première rangée.

Le pas (ou première distance angulaire) des aubes fixes de la première rangée a, selon l'invention, une valeur plus grande entre les aubes situées de part et d'autre des plans radiaux passant par les aubes de la seconde rangée et une valeur plus faible entre les aubes situées entre ces plans radiaux, de sorte que les sillages formés au niveau des bords de fuite des aubes de la première rangée passent respectivement de part et d'autre des aubes de la seconde rangée, en limitant les pertes de charge et les interactions aérodynamiques entre les deux rangées d'aubes.

Selon une autre caractéristique de l'invention, le pas (ou première distance angulaire) (P1) entre les deux aubes de la première rangée, qui sont de part et d'autre du plan radial passant par une aube de la seconde rangée, est égal à 360°(1+m/n)/N, n étant le nombre d'aubes de la seconde rangée, N étant égal à 360°/P2 et P2 étant le pas (ou seconde distance angulaire) entre les aubes de la première rangée qui sont entre deux plans radiaux passant par deux aubes consécutives de la seconde rangée, le nombre d'aubes de la première rangée étant un multiple entier du nombre n d'aubes de la seconde rangée, et m étant un entier inférieur à (n-1) et supérieur ou égal à zéro et tel que N=k.n+m, k étant un entier.

Dans un exemple de réalisation, le pas (ou première distance angulaire) entre les deux aubes fixes de la première rangée situées de part et d'autre du plan radial passant par une aube de la seconde rangée, est égal à environ 1,5 fois le pas (ou seconde distance angulaire) entre les autres aubes fixes de la première rangée.

Dans le cas où les aubes de la première rangée sont celles d'un étage redresseur et les aubes de la seconde rangée sont formées par des bras de carter, le pas (ou première distance angulaire) entre deux aubes de redresseur situées de part et d'autre d'un plan radial passant par un bras de carter, peut être égal à 5,4° environ et le pas (ou seconde distance angulaire) entre les autres aubes du redresseur peut être égal à 3,6° environ.

Le plan radial passant par chaque aube de la seconde rangée peut passer entre l'intrados d'une première aube et l'extrados d'une seconde aube de la première rangée. La distance circonférentielle entre ce plan et l'intrados de ladite première aube peut être inférieure à celle entre le plan et l'extrados de ladite seconde aube.

L'invention sera mieux comprise et d'autres détails, caractéristiques et avantages de celle-ci apparaîtront plus clairement à la lecture de la description qui suit faite à titre d'exemple non limitatif et en référence aux dessins annexés, dans lesquels :

- la figure 1 est une vue très schématique partielle et de dessus d'un redresseur et d'un bras de carter d'une turbomachine selon la technique antérieure,
- la figure 2 est une vue très schématique partielle et de dessus d'un redresseur et d'un bras de carter d'une turbomachine selon l'invention, et

- la figure 3 est une vue correspondant à la figure 2 et illustrant les trajectoires des sillages formés au niveau des bords de fuite des aubes fixes du redresseur et du bras de carter.

La description qui suit concerne le cas où la première rangée d'aubes fixes est celle d'un étage redresseur 10 agencé en sortie d'un étage de compression dans une turbomachine telle qu'un turboréacteur ou un turbopropulseur d'avion, et la seconde rangée d'aubes est formée par une rangée annulaire de bras de carter 20, disposée en aval du redresseur.

Les aubes 12 du redresseur s'étendent sensiblement radialement dans la veine d'écoulement de l'air sortant du compresseur et sont attachées à des carters internes et/ou externes de la turbomachine par des moyens appropriés.

Les bras de carter 20 disposés en aval du redresseur 10, en particulier en sortie du compresseur basse-pression, relient les carters interne et externe du compresseur pour la transmission d'efforts. Ces bras de carter 20 ont un bord amont 22 d'attaque et un bord aval 24 de fuite de l'air provenant du redresseur 10.

Les bras de carter 20 sont en nombre inférieur à celui des aubes fixes 12 du redresseur 10 et sont régulièrement répartis autour de l'axe longitudinal de la turbomachine.

Dans la technique actuelle, les aubes fixes 12 du redresseur sont régulièrement réparties autour de l'axe longitudinal de la turbomachine. Autrement dit, le pas circonférentiel P entre ces aubes 12 est constant.

De plus, les positions angulaires des bras de carter 20 vis-à-vis des aubes 12 du redresseur sont aléatoires. Cette disposition provoque des pertes de charge importantes du fait de l'interaction des sillages formés au niveau des bords de fuite 16 des aubes 12 avec les bras de carter 20, ainsi que des risques de pompage initié au niveau du redresseur.

L'invention permet de remédier à ce problème grâce à une optimisation du nombre d'aubes du redresseur, du pas circonférentiel entre les aubes du redresseur, et des positions angulaires de ces aubes par rapport aux bras de carter, permettant un couplage aérodynamique entre les aubes du redresseur et les bras de carter.

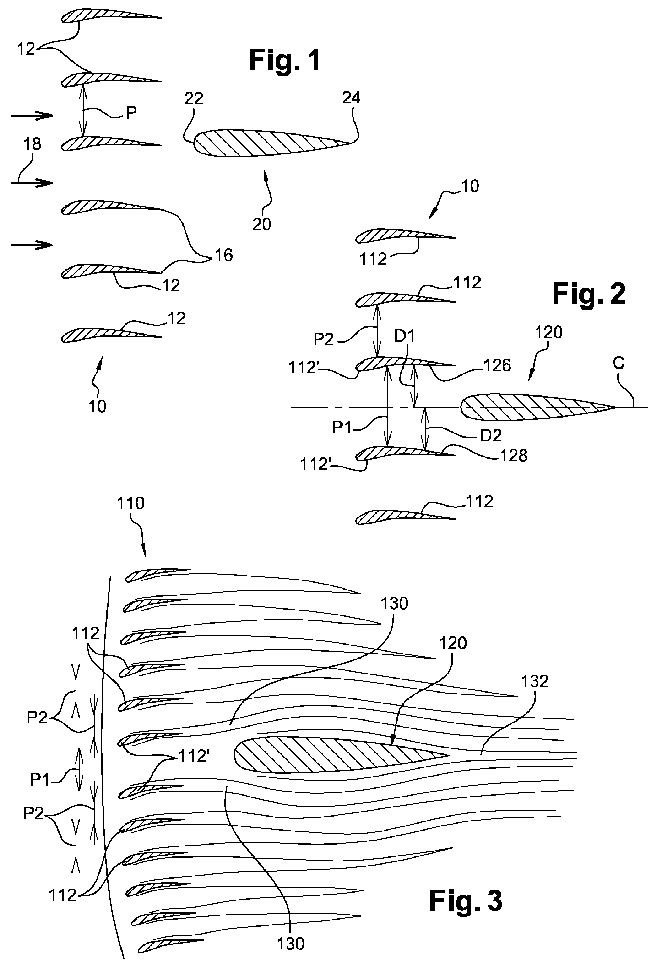

Comme représenté aux figures 2 et 3, chaque bras de carter 120 s'étend dans un plan radial C passant sensiblement entre deux aubes 112' consécutives du redresseur 110. Les bras de carter 120 sont positionnés angulairement par rapport aux aubes 112, 112' du redresseur, de façon à ce que leur plan radial C passe entre deux aubes 112' consécutives, et plus particulièrement entre l'intrados d'une aube 112' et l'extrados de l'autre aube 112'. Avantageusement, la distance circonférentielle D1 entre le plan C et l'intrados de la première aube 112' est inférieure à la distance circonférentielle D2 entre le plan C et l'extrados de l'autre aube 112'.

Le pas P1 entre les aubes 112' situées de part et d'autre d'un plan C a une valeur supérieure à celle du pas P2 entre les autres aubes 112 du redresseur.

Selon l'invention, le pas P1 peut être défini par la relation :

$$P1 = 360° . (1+m/n)/N$$

où :

n est le nombre de bras de carter,
N est égal à 360°/P2,
le nombre d'aubes du redresseur étant un multiple entier du nombre n de bras de carter,
et m est un entier inférieur à (n-1) et supérieur ou égal à zéro et tel que : N=k.n+m, k étant un entier.

La relation ci-dessus peut également s'écrire sous la forme :

$$P1 = P2 + (360° - P2.N')/n$$

où N' est le nombre d'aubes du redresseur.

On peut obtenir cette relation en partant d'un exemple de la technique antérieure, dans lequel le redresseur comprend N aubes fixes réparties de façon uniforme autour de l'axe, avec un pas P2 égal à 360°/N entre les aubes, le nombre de bras de carter étant n. Dans l'invention, on conserve le pas P2 entre les aubes du redresseur qui sont situées entre les plans radiaux passant par les bras du carter et on détermine le pas P1 entre les aubes qui sont de part et d'autre de ces plans radiaux par la relation ci-dessus, le nombre N' d'aubes du redresseur étant cette fois un multiple entier du nombre de bras de carter.

Le pas P2 entre les aubes de redresseur selon l'invention est égal au pas moyen P des aubes de redresseur à répartition uniforme selon la technique antérieure, afin de limiter les risques de perte de marge au pompage lorsque celui-ci est initié au niveau du redresseur.

Le pas P1 entre les aubes 112' est par exemple égal à 1,5 fois environ le pas P2 entre les autres aubes 112. Ce pas P1 peut être égal à 5,4° environ et le pas P2 peut être égal à 3,6° environ, par exemple. Le nombre d'aubes fixes 112, 112' du redresseur 110 est par exemple égal à 96 et le nombre de bras de carter 120 est par exemple de 8.

Comme cela est visible en figure 3, les sillages 130 formés en aval des bords de fuite des aubes 112' du redresseur 110 passent respectivement de part et d'autre du bras de carter 120 et suivent son profil sans créer de perte de charge, puis s'écoulent de part et d'autre du sillage 132 formé par le bord de fuite du bras.

On limite ainsi les interactions entre les bras de carter et les aubes du redresseur situé en amont de ces bras, on réduit les perturbations axisymétriques sur le redresseur et on limite les risques de perte de marge au pompage au niveau du redresseur.

L'invention s'applique à toutes les configurations dans lesquelles deux rangées annulaires d'aubes fixes sont consécutives et en aval l'une de l'autre dans une turbomachine.

## Revendications

1. Turbomachine, comportant au moins une première et une seconde rangées annulaires successives d'aubes fixes, telles par exemple qu'une rangée annulaire d'aubes fixes (112, 112') d'un étage redresseur (110) et une rangée annulaire de bras de carter (120) disposée en aval du redresseur, chaque aube (120) de la seconde rangée s'étendant dans un plan radial (C) passant entre les bords de fuite de deux aubes (112') consécutives de la première rangée, **caractérisée en ce qu'**une première distance angulaire (pas P1) entre ces deux aubes (112') de la première rangée qui se trouvent de chaque côté du plan radial (C) passant par une aube (120) de la seconde rangée est supérieure à une seconde distance angulaire (pas P2) entre deux aubes successives parmi les autres aubes (112) de la première rangée.

2. Turbomachine selon la revendication 1, **caractérisée en ce que** la première distance angulaire (P1) entre les deux aubes (112') de la première rangée, qui sont de part et d'autre du plan radial (C) passant par une aube (120) de la seconde rangée, est égal à 360°(1+m/n)/N, n étant le nombre d'aubes de la seconde rangée, N étant égal à 360°/P2 et P2 étant la distance angulaire entre les aubes de la première rangée qui sont entre deux plans radiaux passant par deux aubes consécutives de la seconde rangée, le nombre d'aubes de la première rangée étant un multiple entier du nombre n d'aubes de la seconde rangée, et m étant un entier inférieur à (n-1) et supérieur ou égal à zéro et tel que N=k.n+m, k étant un entier.

3. Turbomachine selon la revendication 1 ou 2, **caractérisée en ce que** la distance angulaire (P1) entre deux aubes (112') de la première rangée situées de part et d'autre du plan radial (C) passant par une aube (120) de la seconde rangée, est égale à environ 1,5 fois la distance angulaire (P2) entre deux aubes successives parmi les autres aubes (112) de la première rangée.

4. Turbomachine selon lune des revendications 1 à 3, **caractérisée en ce que** la distance angulaire (P1) entre deux aubes (112') de la première rangée situées de part et d'autre du plan radial (C) passant par une aube (120) de la seconde rangée, est égale à 5,4° environ et la distance angulaire (P2) entre deux aubes successives parmi les autres aubes (112) de la première rangée est égal à 3,6° environ.

5. Turbomachine selon l'une des revendications précédentes, **caractérisée en ce que** le plan radial (C) passant par une aube de la seconde rangée passe entre l'intrados d'une première aube (112') et l'extrados d'une seconde aube (112') consécutive de la première rangée, et la distance circonférentielle (D1) entre ce plan et l'intrados de ladite première aube est inférieure à celle (D2) entre le plan et l'extrados de ladite seconde aube.

## Patentansprüche

1. Turbinentriebwerk, dass mindestens eine erste und eine zweite ringförmige Anordnung von feststehenden, aufeinander folgenden Rotorblättern enthält, wie zum Beispiel eine ringförmige Anordnung von feststehenden Rotorblättern (112, 112') einer Gleichrichterstufe (110) und eine ringförmige Anordnung von Gehäusearmen (120), die vor dem Gleichrichter angeordnet sind, wobei sich jedes Rotorblatt (120) der zweiten Anordnung über eine radiale Ebene (C) erstreckt, die zwischen den Ausströmkanten von zwei aufeinander folgenden Rotorblättern (112') der ersten Anordnung verläuft, **dadurch gekennzeichnet, dass** ein erster Winkelabstand (Steigung P1) zwischen diesen zwei Rotorblättern (112') der ersten Anordnung, die sich jeweils zu beiden Seiten der radialen Ebene (C) befinden, welche durch ein Rotorblatt (120) der zweiten Anordnung hindurchführt, größer ist als ein zweiter Winkelabstand (Steigung P2) zwischen zwei aufeinander folgenden Rotorblättern der anderen Rotorblätter (112) der ersten Anordnung.

2. Turbinentriebwerk nach Patentanspruch 1, **dadurch gekennzeichnet, dass** der erste Winkelabstand (P1) zwischen zwei Rotorblättern (112') der ersten Anordnung, die sich zu beiden Seiten der radialen Ebene (C) befinden, welche durch ein Rotorblatt (120) der zweiten Anordnung verläuft, gleich 360° (1+m/n)/N ist, wobei n die Anzahl der Rotorblätter der zweiten Anordnung ist, N gleich 360°/P2 ist und P2 der Winkelabstand zwischen den Rotorblättern der ersten Anordnung ist, die zwischen zwei radialen Ebenen liegen, welche durch zwei auf einander folgende Rotorblätter der zweiten Anordnung verlaufen, wobei die Anzahl der Rotorblätter der ersten Anordnung ein ganzzahliges Vielfaches der Anzahl n der Rotorblätter der zweiten Anordnung ist, und m eine Ganzzahl kleiner (n-1) und größer/gleich Null ist, so dass N=k+m ist, wobei k eine ganze Zahl ist.

3. Turbotriebwerk nach Patentanspruch 1 oder 2, **dadurch gekennzeichnet, dass** der Winkelabstand (P1) zwischen zwei Rotorblättern (112') der ersten Anordnung, die sich zu beiden Seiten der radialen Ebene (C) befindet, welche durch ein anderes Rotorblatt (12°) der zweiten Ebene verläuft, ungefähr gleich 1,5 Mal der Winkelabstand (P2) zwischen zwei von mehreren aufeinander folgenden Rotorblättern (112) der ersten Anordnung ist.

4. Turbinentriebwerk nach einem der Patentansprüche 1 bis 3, **dadurch gekennzeichnet, dass** der Winkelabstand (P1) zwischen zwei Rotorblättern (112') der ersten Anordnung zu beiden Seiten der radialen Ebene (C), welche durch ein Rotorblatt (120) der zweiten Anordnung verläuft, ungefähr gleich 5,4° ist und der Winkelabstand (P2) zwischen zwei von mehreren aufeinander folgenden Rotorblättern (112) der ersten Anordnung ungefähr gleich 3,6° ist.

5. Turbinentriebwerk nach einem der vorhergehenden Patentansprüche, **dadurch gekennzeichnet, dass** die radiale Ebene (C), welche durch ein Rotorblatt der zweiten Anordnung verläuft, zwischen der Blattdruckseite eines ersten Rotorblatts (112') und der Blattsaugseite eines zweiten nachfolgenden Rotorblatts (112') der ersten Anordnung verläuft, und der Umfangsabstand (D1) zwischen dieser Ebene und der Blattdruckseite besagten ersten Rotorblatts kleiner ist als der Umfangsabstand (D2) zwischen der Ebene und der Blattsaugseite besagten zweiten Rotorblatts.


**Claims**

1. A turbine engine comprising at least first and second successive annular rows of stationary vanes, such as for example an annular row of stationary vanes (112, 112') of a nozzle stage (110) and an annular row of casing arms (120) arranged downstream from the nozzle, each vane (120) of the second row extending in a radial plane (C) lying between the trailing edges of two consecutive vanes (112') of the first row, the turbine engine being **characterized in that** a first angular distance (pitch P1) between these two vanes (112') of the first row located on either side of the radial plane (C) lying on a vane (120) of the second row is greater than a second angular distance (pitch P2) between two consecutive vanes of the other vanes (112) of the first row.

2. A turbine engine according to claim 1, **characterized in that** the first angular distance (P1) between the two vanes (112') of the first row that lie on either side of the radial plane (C) passing via a vane (120) of the second row is equal to 360°(1+m/n)/N, $n$ being the number of vanes of the second row, N being equal to 360°/P2, and P2 being the angular distance between the vanes of the first row that lie between two radial planes passing via two consecutive vanes of the second row, the number of vanes of the first row being an integer multiple of the number $n$ of vanes of the second row, and m being an integer less than (n-1) and greater than or equal to zero and such that N=kn+m, where $k$ is an integer.

3. A turbine engine according to claim 1 or claim 2, **characterized in that** the angular distance (P1) between two vanes (112') of the first row situated on either side of the radial plane (C) passing via a vane (120) of the second row, is equal to about 1.5 times the angular distance (P2) between two successive vanes of the other vanes (112) of the first row.

4. A turbine engine according to any one of claims 1 to 3, **characterized in that** the angular distance (P1) between two vanes (112') of the first row situated on either side of the radial plane (C) passing via a vane (120) of the second row, is equal to about 5.4° and the angular distance (P2) between two successive vanes of the vanes (112) of the first row is equal to about 3.6° approximately.

5. A turbine engine according to anyone of the preceding claims, **characterized in that** the radial plane (C) passing via a vane of the second row passes between the pressure side of a first vane (112') and the suction side of a consecutive second vane (112') of the first row, and the circumferential distance (D1) between said plane and the pressure side of said first vane is less than the circumferential distance (D2) between the plane and the suction side of said second vane.

**Fig. 1**

**Fig. 2**

**Fig. 3**

**EP 2 582 986 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2071127 A1
- FR 982027 A